# EUROPEAN PATENT APPLICATION

(11) **EP 4 632 884 A1**
(43) Date of publication of application: **15.10.2025**
(21) Application number: 24749900.7
(22) Date of filing: 12.01.2024
(51) Int. Cl.: H01M 50/107, H01M 50/119, H01M 50/167

(54) **CYLINDRICAL BATTERY**

(30) Priority: 31.01.2023 JP 2023012484
(71) Applicant: Panasonic Energy Co., Ltd., Osaka 570-8511 (JP)
(72) Inventor: KISHIMOTO, Minami, Morigushi-shi, Osaka 570-8511 (JP); OKUTANI, Oose, Morigushi-shi, Osaka 570-8511 (JP)
(74) Representative: Eisenführ Speiser
(86) International application number: PCT/JP2024/000567
(87) International publication number: WO 2024/161945

(57) **Abstract**

A cylindrical battery (10) comprises an electrode body (14), an exterior can (16) having a bottomed cylindrical shape, and a cap (30). The cap (30) has: an annular covering part (41) which covers at least a portion of the outer surface of a shoulder (29) of the exterior can (16); a cylindrical part (42) which extends in a substantially axial direction; and a groove arrangement part (43), at least a portion of which is in contact with an axial top surface of the outer surface of a grooved part (22) of the exterior can (16) and a tip of which is arranged in a groove defined by the grooved part (22).

## Description

### TECHNICAL FIELD

The present disclosure relates to a cylindrical battery.

### BACKGROUND ART

Conventionally, cylindrical batteries include what is described in Patent Literature 1. The cylindrical battery includes: an electrode assembly; a bottomed cylindrical exterior can that accommodates the electrode assembly; a sealing assembly that blocks an opening portion of the exterior can; and a cylindrical reinforcing body. The cylindrical portion of the exterior can includes a grooved portion, and an annular shoulder portion. The grooved portion is formed by depressing part of the cylindrical portion inward in the radial direction. The shoulder portion is formed when an end portion of the cylindrical portion closer to the opening is bent inward and swagged to a peripheral edge portion of the sealing assembly, and extends inward in the radial direction. The reinforcing body is disposed in a range from the shoulder portion beyond the grooved portion on the outer surface of the exterior can.

### CITATION LIST

### PATENT LITERATURE

PATENT LITERATURE 1: Japanese Unexamined Patent Application Publication No. Hei 9-306443

### SUMMARY

There is a possibility that increase in the energy density of the battery, in turn, increases the internal pressure in case of abnormal heat generation due to internal short circuit of the battery or the like, and the sealing assembly protrudes outward accordingly. **In** this case, the opening of the exterior can is open outward. Accordingly, there is a possibility that the material in the battery is scattered outward, and affects devices and the like around the battery.

Patent Literature 1 has an advantage to solve a problem that the sealing degree of the battery decreases in a case where a thin-walled can or an aluminum can having a smaller swagging strength than an iron can is adopted as a battery container. However, in the cylindrical battery of Patent Literature 1 described above, the force of locking the reinforcing body to the grooved portion is small. Consequently, there is room for improvement for preventing the sealing assembly from protruding in case of abnormal heat generation in the battery. Accordingly, the present disclosure has an advantage to provide a cylindrical battery that has a performance of preventing the sealing assembly from protruding in case of abnormal heat generation.

To solve the problem described above, a cylindrical battery according to the present disclosure comprises: an electrode assembly that includes a positive electrode and a negative electrode that are wound with a separator intervening therebetween; a bottomed cylindrical exterior can that includes: a cylindrical portion that includes a shoulder portion extending inward in a radial direction at an end portion on one side in an axial direction, and a grooved portion depressed inward in the radial direction over an entire periphery in a circumferential direction; and a bottom portion that blocks an opening on another side in the axial direction of the cylindrical portion, the bottomed cylindrical exterior can accommodating the electrode assembly; a sealing assembly that blocks an opening portion of the exterior can; and an integral cap that includes: an annular cover portion that covers at least part of an outer surface of the shoulder portion; a cylinder portion that extends substantially in the axial direction; and a groove-placed portion that is in contact at least partially with a surface closer to the sealing assembly in the axial direction on an outer surface of the grooved portion, and has a distal end disposed in the grooved portion.

According to the cylindrical battery of the present disclosure, the performance of preventing the sealing assembly from protruding in case of abnormal heat generation can be improved.

### BRIEF DESCRIPTION OF DRAWING

FIG. 1 is a sectional view of a cylindrical battery in the axial direction according to one embodiment of the present disclosure.
FIG. 2 is an expanded sectional view around a grooved portion in FIG. 1.
FIG. 3 is an expanded sectional view of a cylindrical battery according to a first modified example corresponding to FIG. 2.
FIG. 4 is an expanded sectional view of a cylindrical battery according to a second modified example corresponding to FIG. 2.
FIG. 5 is a sectional view of a cap used for a cylindrical battery of a third modified example before plastic deformation.
FIG. 6 is a perspective view of an upper end portion of the cylindrical battery viewed from a lower lateral side.

### DESCRIPTION OF EMBODIMENTS

Referring to the drawings, an embodiment of a cylindrical battery according to the present disclosure is described below in detail. Note that the cylindrical battery in the present disclosure may be a primary battery or a secondary battery. It may be a battery that uses aqueous electrolyte, or a battery that uses non-aqueous electrolyte. In the following, a non-aqueous electrolyte secondary battery (lithium-ion battery) that uses non-aqueous electrolyte is described below as a cylindrical battery 10 that is an embodiment. However, the cylindrical battery in the present disclosure is not limited to this. The electrolyte may be aqueous electrolyte.

It is originally assumed that the characteristic portions of the embodiment and modified examples described below are combined as appropriate, and a new embodiment is constructed. In the following embodiment, the same configuration is assigned the same symbol in the diagram, and redundant description is omitted. The plurality of drawings include schematic diagrams. Among different diagrams, the ratios of longitudinal, lateral, and height dimensions and the like of the members do not necessarily match. In the present Description, the sense of the axial direction (height direction) of the cylindrical battery 10 where the sealing assembly 17 is present is defined as "upper", and the sense of the axial direction where the bottom portion 31 is present is defined as "lower". Among the configuration elements described below, configuration elements that are not described in an independent claim representing the highest-level concept are arbitrary configuration elements, and are not necessary configuration elements.

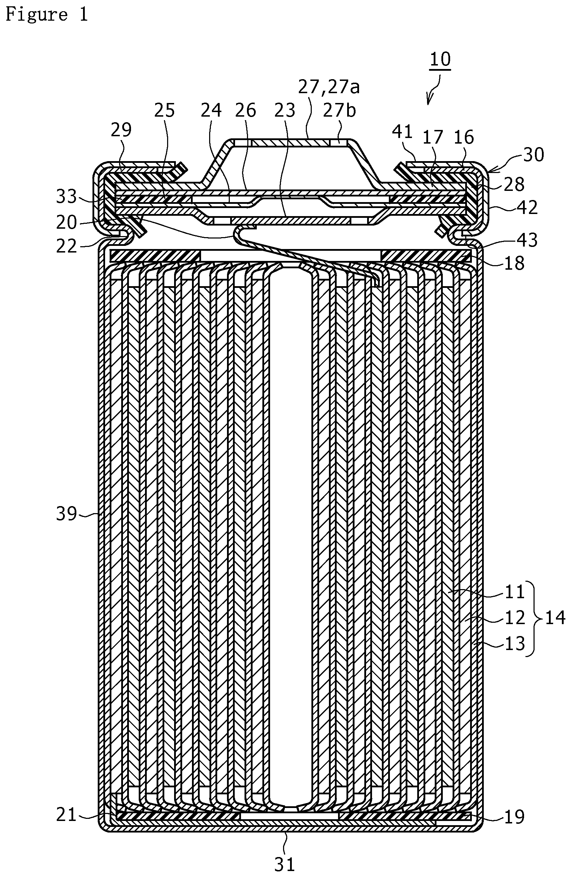

FIG. 1 is a sectional view of a cylindrical battery 10 in the axial direction according to one embodiment of the present disclosure. As shown in FIG. 1, the cylindrical battery 10 includes: an electrode assembly 14; a bottomed cylindrical exterior can 16 that accommodates the electrode assembly 14; a sealing assembly 17 that blocks an opening portion of the exterior can 16; and an annular cap 30 disposed outside the exterior can 16. The exterior can 16 and the cap 30 are made of a metal material. The exterior can 16 houses non-aqueous electrolyte along with the electrode assembly 14.

The exterior can 16 includes, at its upper end portion, an annular shoulder portion 29 that is bent inward in the radial direction and extends inward. The exterior can 16 includes an annular grooved portion 22 formed in a side wall, and the sealing assembly 17 is supported by the grooved portion 22 and blocks an opening portion of the exterior can 16. The cap 30 is joined to the exterior can 16 by laser welding or the like, and is electrically connected to the exterior can 16. The cap 30 is disposed so as to clamp the shoulder portion 29 and the grooved portion 22.

The cylindrical battery 10 further comprises a gasket 28 that intervenes between the exterior can 16 and the sealing assembly 17. The gasket 28 is an annular plastic member attached to an outer peripheral portion of the sealing assembly 17, and insulates the sealing assembly 17 from the exterior can 16. The gasket 28 blocks the gap between the exterior can 16 and the sealing assembly 17, and seals the inside of the battery. The gasket 28 is made of, for example, polyolefin.

The non-aqueous electrolyte contains a non-aqueous solvent, and electrolyte salt dissolved in the non-aqueous solvent. The non-aqueous solvent may be, for example, any of esters, ethers, nitriles, or amides, a mixed solvent of two or more of them, or the like. The non-aqueous solvent may contain a halogenated compound made by replacing at least some of hydrogen atoms of the solvent with halogen atoms, such as fluorine. Examples of the non-aqueous solvent include ethylene carbonate (EC), ethyl methyl carbonate (EMC), dimethyl carbonate (DMC), a mixed solvent of them and the like. The electrolyte salt may be, for example, lithium salt, such as LiPF₆. Note that the non-aqueous electrolyte is not limited to liquid electrolyte, and may be solid electrolyte instead.

The electrode assembly 14 has a wound structure which includes a positive electrode 11, a negative electrode 12, and a separator 13, and in which the positive electrode 11 and the negative electrode 12 are spirally wound with the separator 13 intervening therebetween. The positive electrode 11, the negative electrode 12, and the separator 13 are strip-shaped elongated bodies, and are spirally wound, thus being alternately stacked in the radial direction of the electrode assembly 14. The negative electrode 12 is formed to have a dimension one size larger than the positive electrode 11 in order to prevent lithium from depositing. That is, the negative electrode 12 is formed to be longer in the longitudinal direction and the width direction than the positive electrode 11. The separator 13 is formed to have a dimension at least one size larger than the positive electrode 11. For example, two separators 13 are disposed so as to sandwich the positive electrode 11.

A positive electrode lead 20 and a negative electrode lead 21 are connected to the electrode assembly 14. The positive electrode lead 20 electrically connects the positive electrode 11 and the sealing assembly 17 to each other. The negative electrode lead 21 electrically connects the negative electrode 12 and the exterior can 16 to each other. In the diagram shown in FIG. 1, the positive electrode lead 20 extends toward the sealing assembly 17 through the opening portion of the insulating plate 18, and the negative electrode lead 21 extends toward the bottom portion 31 of the exterior can 16 through the outside of the insulating plate 19.

The positive electrode 11 includes a positive electrode core, and a positive electrode composite agent layer formed on at least one surface of the core. The positive electrode core may be made of metal foil that is stable in the potential range of the positive electrode 11, such as of aluminum or an aluminum alloy, a film on which the metal is disposed as the surface layer, or the like. Preferably, the positive electrode composite agent layer contains: a positive-electrode active material; a conductive agent, such as acetylene black; and a binding agent, such as polyvinylidene fluoride (PVdF), and is formed on each of the opposite surfaces of the positive electrode core. For example, a lithium transition metal composite oxide that contains Ni, Co, Mn, Al or the like is used as the positive-electrode active material. Preferably, while the positive electrode lead 20 is connected to the positive electrode 11, the positive electrode lead 20 is directly joined to the positive electrode core by ultrasonic welding or the like.

The negative electrode 12 includes a negative electrode core, and a negative electrode composite agent layer formed on at least one surface of the core. The negative electrode core may be made of, for example, metal foil that is stable in the potential range of the negative electrode 12, such as of copper or a copper alloy, a film on which the metal is disposed as the surface layer, or the like. Preferably, the negative electrode composite agent layer contains a negative-electrode active material, and a binding agent such as styrene-butadiene rubber (SBR) or PVdF, and is formed on each of the opposite surfaces of the negative electrode core. For example, graphite, a silicon-containing compound or the like is used as the negative-electrode active material. Preferably, the negative electrode lead 21 is directly connected to the negative electrode core by ultrasonic welding or the like. Note that the negative electrode core may be in contact with the inner surface of the exterior can 16, thus electrically connecting the negative electrode 12 and the exterior can 16 to each other.

The exterior can 16 is typically made of metal, with iron as the principal component, but may be made of metal, with aluminum or the like as the principal component, instead. The exterior can 16 includes the cylindrical portion 39 and the bottom portion 31. The cylindrical portion 39 includes the annular grooved portion 22 and the annular shoulder portion 29. The grooved portion 22 is formed by depressing part of the cylindrical portion 39 inward in the radial direction over the entire periphery by a spinning process. The shoulder portion 29 is formed when an upper end portion of the cylindrical portion 39 is bent inward in the radial direction and swagged to a peripheral edge portion 33 of the sealing assembly 17, and extends inward in the radial direction.

In the example shown in FIG. 1, while the shoulder portion 29 may extend substantially in parallel with the radial direction, the shoulder portion 29 may include a part inclined with an acute angle from the radial direction. The sealing assembly 17 is clamped by the shoulder portion 29 and the grooved portion 22 via the gasket 28 by swagging, thus being fixed to the exterior can 16. The grooved portion 22 is formed at a position apart from the upper end of the exterior can 16 by a predetermined length. The predetermined length is, for example, a length corresponding to what is greater than or equal to 1% and less than or equal to 20% of the length of the exterior can 16 in the axial direction. The gasket 28 is strongly compressed by the shoulder portion 29, and partially extends inward in the radial direction between the shoulder portion 29 and the sealing assembly 17.

The sealing assembly 17 has a structure that includes a terminal plate 23, a lower vent member 24, an insulating plate 25, an upper vent member 26, and a sealing plate 27 stacked in this order from the electrode assembly 14 side. The members constituting the sealing assembly 17 each have, for example, a disk shape or a ring shape. Each of the members except the insulating plate 25 are electrically connected to each other. The sealing plate 27 has a convex shape where a center portion in the radial direction protrudes outward. The projection 27a of the sealing plate 27 includes: an inclined surface portion formed annulaly; and a flat top surface portion surrounded by the inclined surface portion. One or more vent holes 27b are formed in the top surface portion.

The lower vent member 24, the insulating plate 25, and the upper vent member 26 constitute a current blocking mechanism. The lower vent member 24 and the upper vent member 26 are connected to each other at their center portions, and the insulating plate 25 intervenes between their peripheral edge portions. In this case, possible increase in the internal pressure due to occurrence of an abnormality in the battery causes the lower vent member 24 to be deformed to push up the upper vent member 26 toward the sealing plate 27 and is broken, thereby breaking the current path between the lower vent member 24 and the upper vent member 26. Further increase in the internal pressure breaks the upper vent member 26, and gas is exhausted through the vent holes 27b of the sealing plate 27.

In the present embodiment, the positive electrode lead 20 is connected to the lower surface of the terminal plate 23 by welding, ultrasonic welding or the like, and the sealing plate 27 that is a top plate of the sealing assembly 17 and is electrically connected to the terminal plate 23 serves as a positive electrode terminal. The negative electrode lead 21 is connected to a can bottom inner surface of the exterior can 16 by welding, ultrasonic welding or the like, and the exterior can 16 serves as a negative electrode terminal. The cap 30 may serve as a negative electrode terminal.

In a case where a plurality of cylindrical batteries 10 are electrically connected and constitute a battery module, an external lead, not shown, is joined to the caps 30 as negative electrode terminals or the upper surfaces of the projections 27a of the sealing plates 27 as positive electrode terminals. As shown in FIG. 1, the presence of the cap 30 extending more inward in the radial direction than the shoulder portion 29 allows the external lead and the negative electrode terminal to be easily joined to each other in comparison with a case where the shoulder portion 29 serves as a negative electrode terminal without using the cap 30. In a case where the distal end portion of the gasket 28 is positioned between the cap 30 and the projection 27a of the sealing plate 27 described later, short-circuit between the positive electrode 11 and the negative electrode 12 can be securely prevented.

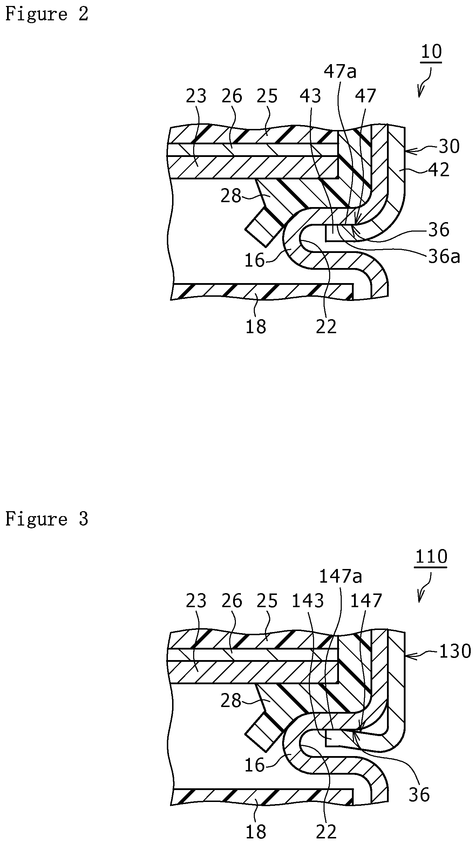

Further referring to FIGS. 1 and 2, the configurations of the exterior can 16 and the cap 30 are described in detail below. FIG. 2 is an expanded sectional view around the grooved portion 22 in FIG. 1. As shown in FIG. 1, the cap 30 includes: an annular cover portion 41 that covers at least part of the outer surface of the shoulder portion 29; a cylinder portion 42 that extends in the substantially axial direction; and a groove-placed portion 43 disposed in the grooved portion 22. The cover portion 41 is bent inward in the radial direction from the distal end of the upper side of the cylinder portion 42 to extend inward, and extends substantially in parallel to the radial direction in the example shown in FIG. 1. The cylinder portion 42 extends downward in the substantially axial direction from the end portion on the outer side of the cover portion 41 in the radial direction. The groove-placed portion 43 extends from the lower end portion of the cylinder portion 42 into the grooved portion 22, and its distal end is disposed in the grooved portion 22. That is, the distal end of the lower side of the cap 30 is disposed in the grooved portion 22.

In the example shown in FIG. 1, the cover portion 41 and the cylinder portion 42 of the cap 30 extend from the radial-direction inner distal end of the shoulder portion 29 of the exterior can 16 to the upper end of the grooved portion 22 along the outer surface of the exterior can 16, and cover the outer surface portion of the exterior can 16. Note that in the example shown in FIG. 1, the entire outer surface of the shoulder portion 29 is in contact with the lower surface of the cover portion 41 in the axial direction. Alternatively, at least part of the outer surface of the shoulder portion 29 may be in contact with the lower surface of the cover portion 41 in the axial direction. In the example shown in FIG. 1, the cover portion 41 extends more inward in the radial direction than the shoulder portion 29. Alternatively, the radial-direction inner distal end of the cover portion 41 may be positioned more outside in the radial direction than the radial-direction inner distal end of the shoulder portion 29.

As shown in FIG. 2, the groove-placed portion 43 is in contact with an annular upper surface (an annular surface closer to the sealing assembly 17 in the axial direction) 36 on the axial-direction upper side of the outer surface of the grooved portion 22. Only at least part of the groove-placed portion 43 is required to be in contact with the upper surface 36 of the grooved portion 22. Preferably, the distal end of the groove-placed portion 43 is in contact with the upper surface 36 of the grooved portion 22. In the example shown in FIG. 2, the groove-placed portion 43 extends along the upper surface 36 of the grooved portion 22. The upper surface 36 includes a planar portion 36a that has a circular ring shape and extends in the radial direction. An annular upper surface (a surface closer to the sealing assembly 17 in the radial direction) 47 of an upper side of the groove-placed portion 43 in the axial direction includes an annular planar portion 47a that extends substantially in parallel with the radial direction and is in contact with the planar portion 36a.

The assembly structure between the exterior can 16 and the cap 30 can be fabricated by, for example, the following procedures. First, in the state where the electrode assembly 14 is accommodated in the exterior can 16, the opening portion of the exterior can 16 is sealed using the spinning process and swagging described above.

Next, the shoulder portion 29 of the exterior can 16 is covered with the cap 30 having a substantially L-shaped half section in the axial direction, thus allowing the cap 30 to be assembled to the exterior can 16. Next, in a state where the exterior can 16 is rotatable around its axial direction, a rotating roller (not shown) is pressed against a portion of the cap 30 that faces the grooved portion 22 in the axial direction, and causes plastic deformation such that the lower distal end portion of the cap 30 can extend along the upper surface 36 of the grooved portion 22. As described above, the assembly structure between the exterior can 16 and the cap 30 can be fabricated.

As described above, according to the cylindrical battery 10, at least part of the cap 30 is in contact with the upper surface 36 of the grooved portion 22, and the lower distal end of the cap 30 is disposed in the grooved portion 22. Consequently, the groove-placed portion 43 that is the lower distal end of the cap 30 can be hooked on the upper surface 36 of the grooved portion 22. Accordingly, the static frictional force of the groove-placed portion 43 against the upper surface 36 can be increased, and the cap 30 can be firmly locked in the grooved portion 30. Thus, the shoulder portion 29, which swages the sealing assembly 17, and the grooved portion 22 can be firmly clamped in the axial direction by the cap 30. Accordingly, the performance of preventing protrusion of the sealing assembly 17 upward in the axial direction in case of abnormal heat generation can be improved.

The upper surface 47 of the groove-placed portion 43 in the axial direction may include the planar portion 47a that extends in the radial direction, and the groove-placed portion 43 may be substantially perpendicularly bent from the cylinder portion 42. This configuration can apply the force in the upward direction parallel to the substantially axial direction, to the upper surface 36 of the grooved portion 22, from the groove-placed portion 43, and can further firmly clamp the shoulder portion 29 and the grooved portion 22 with the cover portion 41 and the groove-placed portion 43 in the axial direction. Consequently, the performance of preventing the sealing assembly 17 from protruding upward in the axial direction in case of abnormal heat generation can be further improved.

Note that the present disclosure is not limited to the aforementioned embodiment and its modified examples, and various improvements and changes can be made in a range of the items described in the claims of the present application and their equivalent range.

For example, as shown in FIG. 3, i.e., the expanded sectional view of a cylindrical battery 110 in a first modified example corresponding to FIG. 2, an upper surface 147 of a groove-placed portion 143 of a cap 130 closer to the sealing assembly 17 in the axial direction may include an inclined surface portion 147a that is displaced upward in the axial direction (closer to the sealing assembly 17 in the axial direction) as approaching the inside in the radial direction.

According to the cylindrical battery 110 of the first modified example, the inclined surface portion 147a is allowed to approach the upper surface 36 of the grooved portion 22 as approaching the inside in the radial direction. Consequently, the contact area between the groove-placed portion 143 and the upper surface 36 can be reduced, and the contact surface pressure between the groove-placed portion 143 and the upper surface 36 can be increased. Thus, the force of locking the cap 130 to the upper surface 36 can be increased, and the performance of preventing protrusion of the sealing assembly 17 upward in the axial direction in case of abnormal heat generation can be excellent.

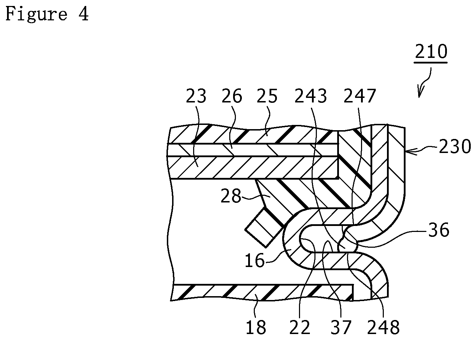

As shown in FIG. 4, i.e., an expanded sectional view of a cylindrical battery 210 in a second modified example corresponding to FIG. 2, an upper surface 247 of a groove-placed portion 243 may be in contact with the upper surface 36 of the grooved portion 22, and a distal end portion 248 of the groove-placed portion 243 may be in contact with an annular lower surface (an annular surface on the bottom portion side in the axial direction) 37 on an axial-direction lower side on the outer surface of the grooved portion 22. Accordingly, the distal end portion 248 of the groove-placed portion 243 is clamped by the grooved portion 22, and the cap 230 is firmly locked in the grooved portion 22.

The cylindrical battery 210 can be fabricated by, for example, the following procedures. First, in the state where the electrode assembly 14 is accommodated in the exterior can 16, the opening portion of the exterior can 16 is sealed using the spinning process and swagging. Next, the shoulder portion 29 of the exterior can 16 is covered with the cap 230 having a substantially L-shaped half section in the axial direction, thus allowing the cap 230 to be assembled to an upper end portion of the exterior can 16.

Subsequently, in a state where the exterior can 16 is rotatable around its axial direction, a rotating roller is pressed against a portion of the cap 230 that faces the grooved portion 22 in the axial direction, and plastically deforms the distal end portion 248 on the lower side of the cap 230 so as to cause the distal end portion 248 to be displaced obliquely downward in the axial direction as approaching the inside in the radial direction.

Lastly, in a state where the bottom surface of the exterior can 16 is placed on the upper surface of the base, pressing contact where the upper surface of the cap 30 is pressed downward in the axial direction with a cylindrical member (not shown) is performed, the length of the grooved portion 22 in the axial direction is adjusted to a predetermined length, and the distal end portion 248 of the groove-placed portion 243 is brought into contact with the lower surface 37 of the grooved portion 22, thereby allowing the assembly structure between the exterior can 16 and the cap 230 to be fabricated.

When the groove-placed portion of the cap is plastically deformed inward in the radial direction into the grooved portion, the perimeter of the groove-placed portion decreases as approaching the distal end of the groove-placed portion. Consequently, when the groove-placed portion is swagged, the groove-placed portion is subjected to a compression load in the circumferential direction, and the compression load increases as approaching the distal end of the groove-placed portion. Therefore, there is a possibility that crimps due to the compression load occur on the groove-placed portion. Next, a cylindrical battery that can prevent the crimps is described.

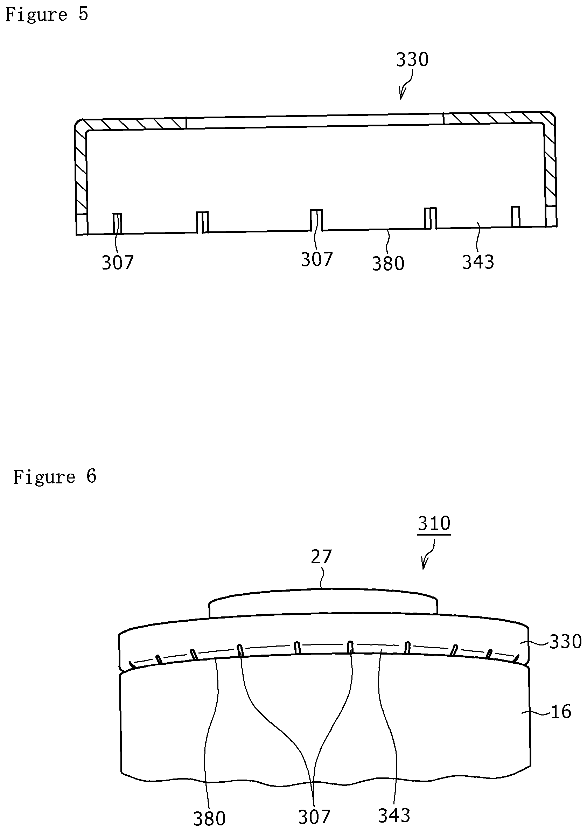

FIG. 5 is a sectional view of a cap 330 that is used for a cylindrical battery 310 in a third modified example and has not been plastically deformed yet. FIG. 6 is a perspective view of an upper end portion of the cylindrical battery 310 when being viewed from a lower lateral side. As shown in FIGS. 5 and 6, the cap 330 has a plurality of slits 307 that are connected to the distal end 380 closer to a groove-placed portion 343 and are disposed at intervals in the circumferential direction. As shown in FIG. 5, the slits 307 are provided in the cylinder portion that extends downward in the axial direction from the outer peripheral end portion of the annular portion of the cap 330 having not been plastically deformed yet. The slits 307 extend in the axial direction in the cap 330 having not been plastically deformed yet and are open downward in the axial direction, and their opposite sides in the radial direction are open in the radial direction. Preferably, the plurality of slits 307 are provided at regular intervals in the circumferential direction in the cap 330 having not been plastically deformed yet.

According to the cylindrical battery 310 in the third modified example, when the groove-placed portion 343 is swagged, part of the wall of the groove-placed portion 343 is allowed to be shifted to the slits 307. Consequently, the compression load in the circumferential direction applied to the groove-placed portion 343 during swagging can be alleviated, and the groove-placed portion 343 can be prevented from being crimped.

### REFERENCE SIGNS LIST

10, 110, 210, 310 Cylindrical battery, 11 Positive electrode, 12 Negative electrode, 13 Separator, 14 Electrode assembly, 16 Exterior can, 17 Sealing assembly, 18, 19 Insulating plate, 20 Positive electrode lead, 21 Negative electrode lead, 22 Grooved portion, 23 Terminal plate, 24 Lower vent member, 25 Insulating plate, 26 Upper vent member, 27 Sealing plate, 27a Projection, 27b Vent hole, 28 Gasket, 29 Shoulder portion, 30, 130, 230, 330, 343 Cap, 31 Bottom portion, 33 Peripheral edge portion, 36 Grooved portion upper surface, 36a grooved portion planar portion, 37 Grooved portion lower surface, 39 Cylindrical portion, 41 Cover portion, 42 Cylinder portion, 43, 143, 243 Groove-placed portion, 47, 147, 247 Groove-placed portion upper surface, 47a Groove-placed portion planar portion, 147a Groove-placed portion inclined surface portion, 248 Groove-placed portion distal end portion, 307 Slit, 380 Groove-placed portion distal end.

## Claims

1. A cylindrical battery, comprising:
an electrode assembly that includes a positive electrode and a negative electrode that are wound with a separator intervening therebetween;
a bottomed cylindrical exterior can that includes: a cylindrical portion that includes a shoulder portion extending inward in a radial direction at an end portion on one side in an axial direction, and a grooved portion depressed inward in the radial direction over an entire periphery in a circumferential direction; and a bottom portion that blocks an opening on another side in the axial direction at the cylindrical portion, the bottomed cylindrical exterior can accommodating the electrode assembly;
a sealing assembly that blocks an opening portion of the exterior can; and
a cap that includes: an annular cover portion that covers at least part of an outer surface of the shoulder portion; a cylinder portion that extends substantially in the axial direction; and a groove-placed portion that is in contact at least partially with a surface closer to the sealing assembly in the axial direction on an outer surface of the grooved portion, and has a distal end disposed in the grooved portion.

2. The cylindrical battery according to claim 1, wherein the surface of the groove-placed portion closer to the sealing assembly in the axial direction includes a planar portion that extends substantially in parallel to the radial direction, or an inclined surface portion that is displaced toward the sealing assembly in the axial direction as approaching an inside in the radial direction.

3. The cylindrical battery according to claim 1, wherein the groove-placed portion is clamped by the grooved portion.

4. The cylindrical battery according to any one of claims 1 to 3, wherein the cap includes a plurality of slits that are connected to the distal end closer to the groove-placed portion and are disposed at intervals in the circumferential direction.
